# EUROPEAN PATENT SPECIFICATION

(11) **EP 3 072 254 B1**
(45) Date of publication and mention of the grant of the patent: **25.12.2019**
(21) Application number: 14864664.9
(22) Date of filing: 12.11.2014
(51) Int. Cl.: H04L 5/00, H04L 27/26

(54) **MASTER STATION AND METHOD FOR HEW COMMUNICATION USING A TRANSMISSION SIGNALING STRUCTURE FOR A HEW SIGNAL FIELD**
MASTER-STATION UND VERFAHREN FÜR HEW-KOMMUNIKATION MIT ÜBERTRAGUNGSSIGNALISIERUNGSSTRUKTUR FÜR EIN HEW-SIGNALFELD
STATION PRINCIPALE ET PROCÉDÉ DE COMMUNICATION HEW UTILISANT UNE STRUCTURE DE SIGNALISATION D'ÉMISSION POUR UN CHAMP DE SIGNAL HEW

(30) Priority: 19.11.2013 US 201361906059 P; 01.04.2014 US 201461973376 P; 08.04.2014 US 201461976951 P; 30.04.2014 US 201461986256 P; 30.04.2014 US 201461986250 P; 08.05.2014 US 201461990414 P; 12.05.2014 US 201461991730 P; 18.06.2014 US 201462013869 P; 15.07.2014 US 201462024813 P; 15.07.2014 US 201462024801 P; 18.07.2014 US 201462026277 P; 12.08.2014 US 201414458000
(43) Date of publication of application: 28.09.2016
(60) Divisional application: 17153414.2
(73) Proprietor: Intel IP Corporation, Santa Clara, CA 95054 (US)
(72) Inventor: AZIZI Shahrnaz, Cupertino, CA 95014 (US); KENNEY, Thomas J., Portland, Oregon 97229 (US); LI, Guoqing C., Portland, Oregon 97229 (US); PERAHIA, Eldad, Portland, Oregon 97229 (US); STACEY, Robert J., Portland, Oregon 97210 (US)
(74) Representative: HGF Limited
(86) International application number: PCT/US2014/065166
(87) International publication number: WO 2015/077096

(56) References cited:
- US-A1- 2008 240 275
- US-A1- 2010 046 671
- US-A1- 2010 309 834
- US-A1- 2011 063 991
- US-A1- 2012 002 756
- Jinyoung Chun ET AL: "Legacy Support on HEW frame structure", , 1 September 2013 (2013-09-01), pages 1-8, XP055292245, Retrieved from the Internet: URL:http://www.ieee802.org/11/Reports/hew_ update.htm [retrieved on 2016-07-29]
- TIMO KOSKELA ET AL.: 'Discussion on Potential Techniques for HEW' IEEE 802.11-13/0871R0 01 July 2013, pages 1 - 13, XP055149691
- JINYOUNG CHUN ET AL.: 'Legacy Support on HEW frame structure' IEEE 11-13/1057R0 16 September 2013, pages 1 - 8, XP002728788

## Description

### TECHNICAL FIELD

Embodiments pertain to wireless networks. Some embodiments relate to wireless local area networks (WLANs), Wi-Fi networks and networks operating in accordance with one of the IEEE 802.11 standards, such as the IEEE 802.11ac standard or the IEEE 802.11ax SIG (named DensiFi). Some embodiments relate to high-efficiency wireless or high-efficiency WLAN (HEW) communications.

### BACKGROUND

IEEE 802.11 ax, referred to as High Efficiency WLAN (HEW), is a successor to IEEE 802.1 lac standard and is intended to increase the efficiency of wireless local-area networks (WLANs). HEW's goal is to provide up to four-times or more the throughput of IEEE 802.11 ac standard. HEW may be particularly suitable in high-density hotspot and cellular offloading scenarios with many devices competing for the wireless medium may have low to moderate data rate requirements. The Wi-Fi standards have evolved from IEEE 802.11b to IEEE 802.11g/a to IEEE 802.11η to IEEE 802.11ac and now to IEEE 802.11 ax. In each evolution of these standards, there were mechanisms to afford coexistence with the previous standard. For HEW, the same requirement exists for coexistence with these legacy standards. One issue with HEW is the efficient allocation and use of bandwidth.

Thus there are general needs for systems and methods that that allow HEW devices to coexist with legacy devices. There are also general needs for systems and methods that that allow HEW devices to coexist with legacy devices and more efficiently allocate and use the available bandwidth.

U.S. Patent Publication 2011/063991 A1, Sampath, Hemanth, et al., 17 March 2011 discloses allocating resources for stations where the wireless medium using spatial processing may be shared.

### BRIEF DESCRIPTION OF THE DRAWINGS

FIG. 1 illustrates an HEW network in accordance with some embodiments;
FIG. 2A illustrates a legacy packet structure;
FIG. 2B illustrates an HEW packet structure in accordance with some embodiments;
FIG. 3 illustrates an OFDMA subchannel configuration for 20 MHz channels in accordance with some embodiments;
FIG. 4 illustrates a simplified OFDMA subchannel configuration for 20 MHz channels in accordance with some embodiments;
FIG. 5 is a function block diagram of an HEW device in accordance with some embodiments; and
FIG. 6 is a procedure for HEW communication by a master station in accordance with some embodiments.

### DETAILED DESCRIPTION

The following description and the drawings sufficiently illustrate specific embodiments to enable those skilled in the art to practice them. The invention is defined by appended claims. The embodiments that do not fully fall under the scope of the claims have to be interpreted as examples useful for understanding the invention.

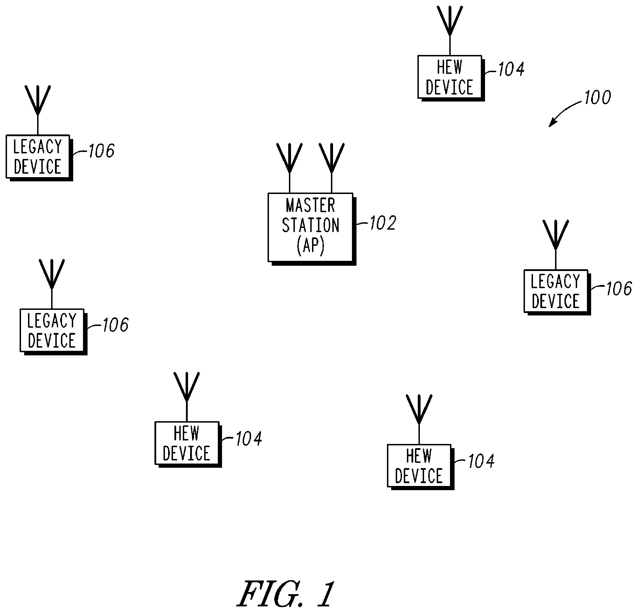

FIG. 1 illustrates a HEW network in accordance with some embodiments. HEW network 100 may include a master station (STA) 102, a plurality of HEW stations 104 (HEW devices), and a plurality of legacy devices 106 (legacy stations). The master station 102 may be arranged to communicate with the HEW stations 104 and the legacy devices 106 in accordance with one or more of the IEEE 802.11 standards. In accordance with some HEW embodiments, the mater station 102 and HEW stations 104 may communicate in accordance with an IEEE 802.11ax standard. In accordance with some HEW embodiments, the access point 102 may operate as a master station which may be arranged to contend for a wireless medium (e.g., during a contention period) to receive exclusive control of the medium for an HEW control period (i.e., a transmission opportunity (TXOP)). The master station may transmit an HEW master-sync transmission at the beginning of the HEW control period. During the HEW control period, scheduled HEW stations 104 may communicate with the master station in accordance with a non-contention based multiple access technique. This is unlike conventional Wi-Fi communications in which devices communicate in accordance with a contention-based communication technique, rather than a multiple access technique. During the HEW control period, the master station may communicate with HEW stations using one or more HEW frames. During the HEW control period, legacy stations refrain from communicating. In some embodiments, the master-sync transmission may be referred to as an HEW control and schedule transmission.

In some embodiments, the multiple-access technique used during the HEW control period may be a scheduled orthogonal frequency division multiple access (OFDMA) technique, although this is not a requirement. In some embodiments, the multiple access technique may be a time-division multiple access (TDMA) technique or a frequency division multiple access (FDMA) technique. In some embodiments, the multiple access technique may be a space-division multiple access (SDMA) technique. Communications during the control period may be either uplink or downlink communications.

The master station 102 may also communicate with legacy stations 106 in accordance with legacy IEEE 802.11 communication techniques. In some embodiments, the master station 102 may also be configurable communicate with HEW stations 104 outside the HEW control period in accordance with legacy IEEE 802.11 communication techniques, although this is not a requirement.

In some embodiments, the data fields of an HEW frame may be configurable to have the same bandwidth and the bandwidth may be one of 20 MHz, 40 MHz, or 80 MHz contiguous bandwidths or an 80+80 MHz (160 MHz) non-contiguous bandwidth. In some embodiments, a 320 MHz contiguous bandwidth may be used. In these embodiments, each data field of an HEW frame may be configured for transmitting a number of spatial streams. In some embodiments, data fields of an HEW frame may be communicated within OFDMA subchannels having one or more minimum bandwidth units. These embodiments are discussed in more detail below.

In some embodiments, a transmission signaling structure is used to carry packet information (e.g., an HEW frame) to configure devices (e.g., the HEW stations 104) to demodulate a specific portion of the packet and/or to configure devices to transmit or receive using specific OFDMA and MU-MIMO resources. In some embodiments, the specific portion of the packet may comprise one or more minimum bandwidth units of one or more 20 MHz bandwidth structures (e.g., channels). Each 20 MHz bandwidth structure may comprise several minimum bandwidth units to allow each 20 MHz segment to have a have smaller granularity than 20 MHz. Some of the embodiments disclosed herein may provide a signaling design to configure OFDMA receivers in the next generation of Wi-Fi standards, such as High Efficiency WLAN (HEW) (i.e., the IEEE 802.11ax task group), although the scope of the embodiments is not limited in this respect.

Since one main use case for HEW is dense deployments with many devices trying to access the medium with moderate data rates, techniques to allow more simultaneous access devices are needed. The current IEEE 802.11ac specification allows for up to 160 MHz of bandwidth with eight simultaneous multi-input multiple-output (MIMO) streams. The focus for HEW is to use that wide bandwidth to provide access to many devices. Some of the embodiments disclosed herein define a transmission signaling structure that carries packet information to configure an OFDMA receiver and/or to configure the upcoming OFDMA transmission by the devices at the receiving end.

Some embodiments disclosed herein define a transmission signaling structure that is efficient, extensible and decodable by devices that operate in 20 MHz mode which other proposals thus far in DensiFi or IEEE do not provide. In accordance with some embodiments, the transmission structure is configured to carries packet information to configure the OFDMA receivers so that the receivers can demodulate a specific portion of the packet (e.g., specific OFDMA resources and/or MU-MIMO streams) and/or to configure receivers to transmit using specific OFDMA and MU-MIMO resources. The inventive structure may use a minimum of 20 MHz bandwidth and it is modular and extensible to higher bandwidths that are multiples of 20 MHz (e.g., legacy Wi-Fi bandwidths of operation 40, 80 and 160 MHz). Each 20 MHz structure may in turn configure OFDMA subchannels of one or more minimum bandwidth units. These embodiments allow configuring HEW stations 104 to be configured for OFDMA communication in the uplink direction and for OFDMA communication in the downlink direction.

One design target for HEW is to adopt methods to improve the efficiency of Wi-Fi, and specifically the efficiency in dense deployments. Based on this target for HEW, techniques to improve the physical layer (PHY) efficiency such as OFDMA techniques have been proposed. Embodiments disclosed herein provide a new packet structure that may be used in order to configure OFDMA receiver.

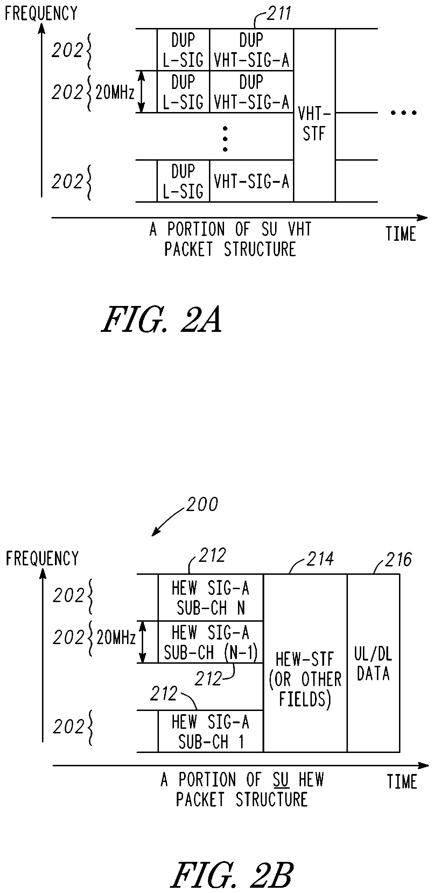

FIG. 2A illustrates a legacy packet structure. In FIG. 2A it can be seen that in IEEE 802.11ac the VHT-SIG-A is duplicated in each 20 MHz channel 202. Additionally the VHT-SIG-A transmission uses an IEEE 802.11a compatible waveform that contains only 48 data subcarriers.

FIG. 2B illustrates an HEW packet structure in accordance with some embodiments. Embodiments disclosed herein do not duplicate a signal field in each segment and instead transmit independent signal field (e.g., HEW signal field 212) that configures recipient stations in each 20 MHz channel 202. Some embodiments may use fifty-two (52) data subcarriers (e.g., instead of 48) providing more subcarriers to carry signaling information. As illustrated in FIG. 2B, the transmission signaling structure 200 may comprises a separate HEW signal field (HEW-SIG-A) 212 for each of a plurality of 20 MHz channels 202. Each HEW signal field 212 may configure one or more of the scheduled HEW stations 104 for communication on the one or more OFDMA subchannels of an associated one of the 20 MHz channels 202 in accordance with the OFDMA technique. Each 20 MHz channel 202 may be configurable to include one or more fields 214, 216 that follow the HEW signal field 212. In some embodiments, a HEW short training field (HEW-STF) 214 and data field 216 may also be included in the transmission signaling structure 200. These embodiments are described in more detail below.

In accordance with embodiments, the master station 102 may be configured to generate a packet that includes the transmission signaling structure 200 to configure scheduled HEW stations 104 for communication on channel resources in accordance with an OFDMA technique. The channel resources may comprise one or more OFDMA subchannels within a legacy 20 MHz channel 202. Each OFDMA subchannel may comprise one or more minimum bandwidth units having a predetermined bandwidth.

As discussed previously, the HEW OFDMA structure may have smaller granularity than 20 MHz. Therefore, each HEW signal field 212 for either downlink (DL) or uplink (UL) OFDMA scheduling may configure the OFDMA structure within each 20 MHz segment. These embodiments are discussed in more detail below.

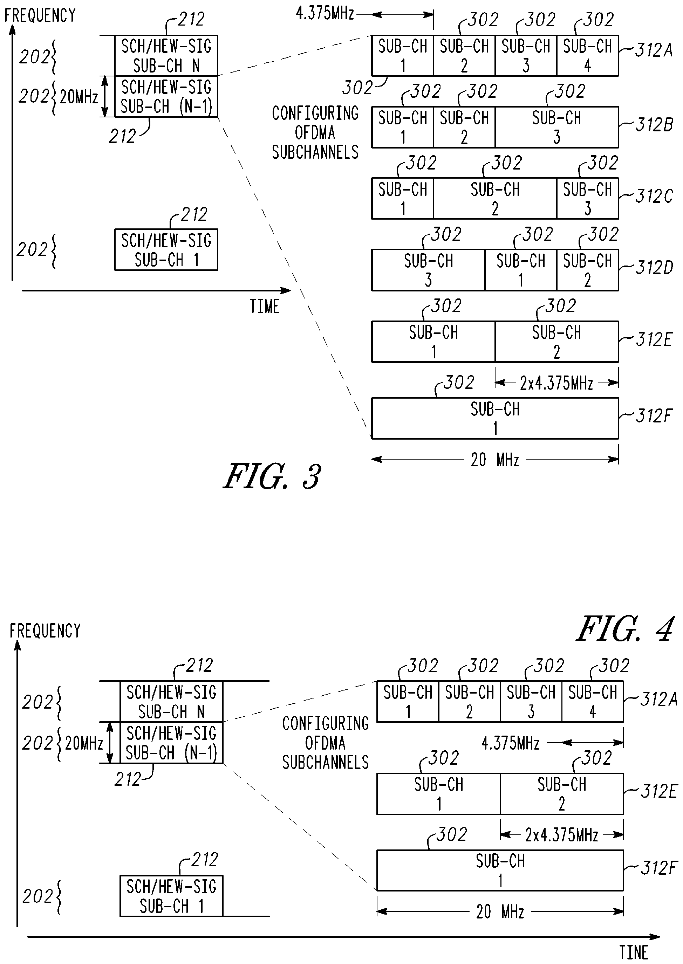

FIG. 3 illustrates an OFDMA subchannel configuration for 20 MHz channels in accordance with some embodiments. FIG. 3 illustrates subchannel configurations 312A, 312B, 312C, 312D, 312E and 312F.

FIG. 4 illustrates a simplified OFDMA subchannel configuration for 20 MHz channels in accordance with some embodiments. FIG. 4 illustrates subchannel configurations 312A, 312E and 312F.

Referring to FIGs. 3 and 4, in accordance with some embodiments, the transmission signaling structure 20 (FIG. 2) may configure scheduled HEW stations 104 (FIG. 1) for communication on channel resources in accordance with an OFDMA technique and the channel resources may comprise one or more OFDMA subchannels 302 within a 20 MHz channel 202. As illustrated in FIGs. 3 and 4, each OFDMA subchannel 302 may comprise one or more minimum bandwidth units having a predetermined bandwidth. In these embodiments, the transmission signaling structure may comprise independent signal fields (e.g., HEW signal fields 212 (FIG. 2)) for each 20 MHz channel to configure HEW stations 104 for OFDMA communications (i.e., either downlink or uplink communications) during an OFDMA control period.

In some embodiments, each minimum bandwidth unit may be 4.75 MHz, for example, and each OFDMA subchannel 302 may comprise up to four minimum bandwidth units, although the scope of the embodiments is not limited in this respect. In some embodiments, each 20 MHz channel 202 may comprise up to four OFDMA subchannels 302, although the scope of the embodiments is not limited in this respect. In these embodiments, the size of the minimum bandwidth unit is fixed which allows while the size of the OFDMA subchannel 302 to vary based on the number of minimum bandwidth units.

As mentioned above, a separate HEW signal field 212 (e.g., HEW-SIG-A) for each of a plurality of 20 MHz channel may be provided and each HEW signal field 212 may configure one or more of the scheduled HEW stations 104 for communication on the one or more OFDMA subchannels 302 of an associated one of the 20 MHz channels 202 in accordance with the OFDMA technique. In these embodiments, the transmission of a separate and possibly different HEW signal field 212 on each 20 MHz channel 202 allows the OFDMA structure for each 20 MHz channel to be individually configured (e.g., a different number of subchannels 302, different communication parameters such as MCS, etc.). These embodiments are discussed in more detail below. In some embodiments, the transmission signaling structure 200 may be a preamble, although the scope of the embodiments is not limited in this respect.

In some embodiments, each HEW signal field 212 may be a 20 MHz transmission on an associated one of the 20 MHz channels 202 and each of the separate HEW signal fields 212 may be configured to be transmitted concurrently on an associated one of the 20 MHz channels 202. Accordingly, different HEW signal fields 212 may be transmitted concurrently on each 20 MHz channel.

In some embodiments, each HEW signal field 212 is arranged to configure scheduled HEW stations 104 for communication on up to four of the OFDMA subchannels 302 within each one of the 20 MHz channels 202. In these example embodiments, each 20 MHz channel 202 may be divided into a maximum of four minimum bandwidth units, each associated with an OFDMA subchannel 302.

In some embodiments, each OFDMA subchannel 302 may comprise between one and four minimum bandwidth units of the predetermined bandwidth within each 20 MHz channel. In these embodiments, since a minimum bandwidth unit has a predetermined bandwidth, the number of minimum bandwidth units within a 20 MHz channel would also be fixed. The number of OFDMA subchannels 302 within a 20 MHz channel 202, however, may vary as each OFDMA subchannel 302 may be configured with a number of minimum bandwidth units (e.g., between one and four).

In some embodiments, the predetermined bandwidth of a minimum bandwidth unit is 4.375 MHz. In some embodiments, the predetermined bandwidth is defined by a predetermined number of subcarriers and predetermined subcarrier spacing. In some embodiments, predetermined number of subcarriers is fourteen (14) and the predetermined subcarrier spacing is 312.5 KHz to provide the predetermined bandwidth of 4.375. In these embodiments, a 64-point FFT may be used.

In some other embodiments, a 256-point FFT may be used. In these other embodiments that use a 256-point FFT, the predetermined number of subcarriers of a minimum bandwidth unit may be 14x4=56 and the predetermined subcarrier spacing may be 312.5/4=78.125 kHz, for example.

In other embodiments (not separately illustrated), each HEW signal field 212 may configure (e.g., carry configuration for) the scheduled HEW stations 104 for communication on up to eight or more of the OFDMA subchannels within each one of the 20 MHz channels 202. In these other embodiments, each 20 MHz channel 202 may be divided into up to eight or more minimum bandwidth units and each minimum bandwidth unit may be less than 4.375 MHz, for example.

In some embodiments, the HEW signal field 212 for each 20 MHz channel may be generated to include an indicator to indicate a subchannel configuration of the associated 20 MHz channel. The subchannel configuration may include at least a number of the minimum bandwidth units. The subchannel configuration may also include information (e.g., communication parameters) for communicating within the OFDMA subchannels 302 during the OFDMA control period including, for example, a modulation and coding scheme (MCS) indicator and length indicator for the minimum bandwidth units. Accordingly, different communication parameters (e.g., MCS) may be used for each 20 MHz channel 202, and in some embodiments, may be used for each OFDMA subchannel 302.

In some embodiments, the indicator in the HEW signal field 212 to indicate the subchannel configuration for each 20 MHz channel may indicates one of a plurality of subchannel configurations (e.g., subchannel configurations 312A, 312B, 312C, 312D, 312E and 213F). In the example illustrated in FIGs. 3 and 4, subchannel configuration 312A may comprise four OFDMA subchannels 302 where each OFDMA subchannel 302 comprises a single minimum bandwidth unit. Subchannel configurations 312B/C/D may comprise three OFDMA subchannels 302 in which two of the OFDMA subchannels 302 comprise a single minimum bandwidth unit and one of the OFDMA subchannels 302 comprises two adjacent minimum bandwidth units. Subchannel configuration 312E may comprise two OFDMA subchannels 302 wherein each OFDMA subchannel 302 comprises two adjacent minimum bandwidth units. Subchannel configuration 312F may comprise a single OFDMA subchannel 302 comprising four adjacent minimum bandwidth units.

For example, the HEW signal field 212 may indicate the use of MCS #1 in a 10MHz subchannel 302 of subchannel configuration 312E. In some embodiments, the indicator may indicate a particular subchannel configuration (i.e., subchannel configuration 312B, subchannel configuration 312C or subchannel configuration 312D) which may define the location and number of the different subchannels 302 within the channel 202. As illustrated in FIG. 3, for example, each 20 MHz channel 202 may be configured in accordance with any one of a plurality of subchannel configurations (e.g., subchannel configuration 312A, subchannel configuration 312B, subchannel configuration 312C, subchannel configuration 312D, subchannel configuration 312E, or subchannel configuration 312F).

In some embodiments, up to 52 subcarriers (i.e., instead of 48 in the conventional VHT-SIG-A 211 (FIG. 2A)) of a 20 MHz channel may be used for data communication in accordance with the OFDMA technique during the OFDMA control period. These embodiments are discussed in more detail below.

In some embodiments, each 20 MHz channel 202 may be configurable to include one or more fields 214, 216 that follow the HEW signal field 212. In some embodiments, the one of more fields 214, 216 may be configurable to include a minimum of four minimum bandwidth units of 4.375 MHz that are interleaved with null subcarriers in addition to a null subcarrier at DC and further configured to include one or more extra/additional null subcarriers around DC and at band edges to cover a 20MHz bandwidth of each 20 MHz channel. For example, for data field 216, when the predetermined number of subcarriers of an minimum bandwidth unit is fourteen and the predetermined subcarrier spacing is 312.5 KHz to provide a predetermined bandwidth of 4.375, the 56 subcarriers of the minimum bandwidth units may include at least one pilot subcarrier allowing up to 52 total subcarriers for data, although the scope of the embodiments is not limited in this respect. The HEW-SIG 212, on the other hand, would be transmitted using entire 20MHz bandwidth using 52 data tones and 4 pilot tones, for example.

In some embodiments, the transmission signaling structure 200 may include an HEW schedule (SCH) field to indicate the particular time and frequency resources of the OFDMA subchannels 302 for each scheduled station 104 for communicating with the master station 102 in accordance with the OFDMA technique during the OFDMA control period. In some embodiments, the HEW schedule field may have independent coding (i.e., may be a separate field) and may follow the HEW signal field 212, although this is not a requirement. In other embodiments, the HEW schedule field may be part of the HEW signal field 212. In some embodiments, the scheduling information may be part of the HEW signal field 212 rather than a separate HEW schedule field, although the scope of the embodiments is not limited in this respect. In some embodiments, the scheduling information may be embedded in a data field, although the scope of the embodiments is not limited in this respect.

In some embodiments, the master station 102 may allocate bandwidth to the scheduled HEW stations 104 based on the minimum bandwidth unit for communication with the master station 102 during an OFDMA control period during which the master station 102 has exclusive control of a wireless medium (i.e., during a TXOP). In these embodiments, the minimum bandwidth units may be configurable to be time and frequency multiplexed during data field 216 (FIG. 2) which may occur within the OFDMA control period. During the control period, packets are either received from the scheduled HEW stations 104 in accordance with an uplink spatial-division multiple access (SDMA) technique using OFDMA, or transmitted to the scheduled HEW stations 104 in accordance with downlink multiplexing technique using OFDMA (i.e., uplink or downlink data during data field 216 (FIG. 2) may be communicated with the scheduled HEW stations).

In some embodiments, the data field 216 may be configured for both downlink and uplink transmissions. In these embodiments, the scheduling information either in HEW SIG 212 or a SCH field may include downlink and uplink scheduling information. In these embodiments, after a downlink transmission by the master station 102 in data field 216, the master station 102 may receive uplink transmissions from the scheduled stations within the data field 216 after a specific inter-frame space (e.g., an SIFS).

In some embodiments, the HEW signal field 212 may also include configuration parameters such as a STBC (1 bit) indicator to indicate if space-time block coding (STBC) is used, a group ID (6 bits) indicator to enable a receiver to determine whether the data payload is single user (SU) or multi user (MU), a number of space-time streams (e.g., 3 bits) indicator to indicate the number of space-time streams, a LDPC extra symbol (e.g., 1 bit) indicator for LDPC coding, a MCS field that contains an MCS index value for the payload, a beamformed (e.g., 1 bit) indicator to indicate when a beamforming matrix is applied to the transmission, a cyclic-redundancy check (CRC) to allow for detect errors in the HEW signal field 212. This is unlike a conventional VHT-SIG-A 211 (FIG. 2A) which requires a bandwidth indicator. In these embodiments, the HEW signal field 212 would not need a bandwidth indicator since the HEW signal field 212 is not duplicated on each 20 MHz channel as is the VHT-SIG-A 211, although the scope of the embodiments is not limited in this respect as a bandwidth indicator may be included to ease receiver implementation.

In some embodiments, these configuration parameters may be used for each different subchannel configuration 312A through 312F. This may result in longer HEW signal field 212 compared to VHT-SIG-A 211 (e.g., for example 6 or 8 OFDMA symbols).

In some alternate embodiments, one or more of the same configuration parameters may be scheduled across all configurations (i.e., subchannel configurations 312A-312F) (e.g., the same STBC or use of LDPC) to reduce overhead of the HEW signal field 212. For example, if the same STBC is to be used for all subchannel configurations, the STBC bit would not need to be repeated for each subchannel configuration but would be sent only once (e.g., in a master-sync transmission) for all minimum bandwidth units. This may allow the HEW signal field 212 to be shorter compared with the conventional VHT-SIG-A 211.

As discussed above, in some embodiments, the one of more fields of the HEW transmission signaling structure 200 may be configurable to include several minimum bandwidth units that are interleaved with null subcarriers (i.e., in addition to a null subcarrier at DC) and may include one or more extra/additional null subcarriers around DC and at band edges to cover a 20MHz bandwidth of each 20 MHz channel. In some embodiments, the addition of null subcarriers may relax the implementation requirements on synchronization, DC-cancellation, power amplifier and filtering.

In some embodiments, a 20 MHz channel 202 may be configured with two wider subchannels and each subchannel comprises a bandwidth of 2 x 4.375MHz minimum bandwidth units. In these embodiments, the waveform transmitted in each 2x4.375 MHz bandwidth may be different than two waveforms transmitted that would be transmitted in each single 4.375 MHz minimum bandwidth unit.

Some embodiments may simplify the design by allowing only a subset of the OFDMA configurations (e.g., the subchannel configurations of FIG. 4 instead of the subchannel configurations of FIG. 3). Such simplification reduces the information needed to configure the receiver and thereby reduces signaling overhead and thus improves on overall system efficiency.

Some embodiments may restrict the number of scheduled HEW stations 104 assigned in each minimum bandwidth unit (e.g., to four multi-user MIMO (MU-MIMO) users). These embodiments may allow the number of spatial streams to be reduced to up to three streams per user. Restricting the number of MU-MIMO users to four may use only two information bits to be carried and restricting number of spatial streams up to three uses another two information bits. These restrictions may further reduce the signaling overhead in the HEW signal field 212, although the scope of the embodiments is not limited in this respect..

Some embodiments disclosed herein provide a modular and extensible OFDMA structure. The basic structure, for example, may configure four minimum bandwidth units or several combinations of the minimum bandwidth unit (e.g., 4.375MHz and 2x4.375MHz).

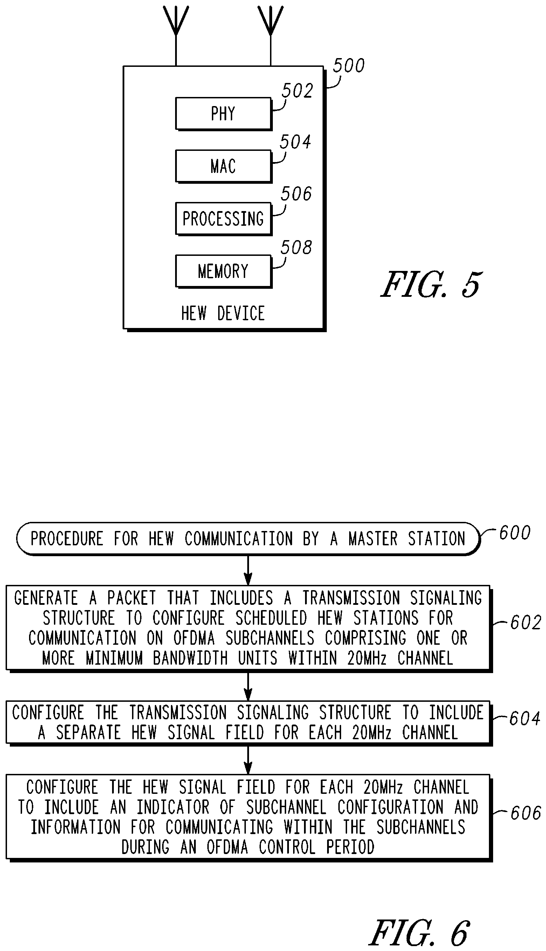

FIG. 5 is a function block diagram of an HEW device in accordance with some embodiments. HEW device 500 may be an HEW compliant device that may be arranged to communicate with one or more other HEW devices, such as HEW stations 104 (FIG. 1) or master station 102 (FIG. 1), as well as communicate with legacy devices. HEW device 500 may be suitable for operating as master station 102 (FIG. 1) or an HEW station 104 (FIG. 1). In accordance with embodiments, HEW device 500 may include, among other things, physical layer (PHY) circuitry 502 and medium-access control layer circuitry (MAC) 504. PHY 502 and MAC 504 may be HEW compliant layers and may also be compliant with one or more legacy IEEE 802.11 standards. PHY 502 and MAC 504 may be arranged to transmit HEW frames in accordance with the structures and techniques disclosed herein. HEW device 500 may also include other processing circuitry 506 and memory 508 configured to perform the various operations described herein.

In accordance with some HEW embodiments, the MAC 504 may be arranged to contend for a wireless medium during a contention period to receive control of the medium for the HEW control period and configure an HEW frame. The PHY 502 may be arranged to transmit a transmission signaling structure within a HEW frame as discussed above. The PHY 502 may also be arranged to communicate with the HEW stations 104 in accordance with an OFDMA technique. MAC 504 may also be arranged to perform transmitting and receiving operations through the PHY 502. The PHY 502 may include circuitry for modulation/demodulation, upconversion/downconversion, filtering, amplification, etc. In some embodiments, the processing circuitry 506 may include one or more processors. In some embodiments, two or more antennas may be coupled to the physical layer circuitry arranged for sending and receiving signals including transmission of the HEW frame. The memory 508 may be store information for configuring the processing circuitry 506 to perform operations for HEW communication and performing the various operations described herein. In some embodiments, the HEW device 500 may comprise one or more radios (e.g., a WLAN radio and a cellular/LTE radio) for communicating with different types of networks.

In some embodiments, the HEW device 500 may be configured to communicate using OFDM communication signals over a multicarrier communication channel. In some embodiments, HEW device 500 may be configured to receive signals in accordance with specific communication standards, such as the Institute of Electrical and Electronics Engineers (IEEE) standards including IEEE 802.11-2012, 802.11n-2009 and/or 802.11ac-2013 standards and/or proposed specifications for WLANs including proposed HEW standards, although the scope of the invention is not limited in this respect as they may also be suitable to transmit and/or receive communications in accordance with other techniques and standards. In some other embodiments, HEW device 500 may be configured to receive signals that were transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, HEW device 500 may be part of a portable wireless communication device, such as a personal digital assistant (PDA), a laptop or portable computer with wireless communication capability, a web tablet, a wireless telephone or smartphone, a wireless headset, a pager, an instant messaging device, a digital camera, an access point, a television, a medical device (e.g., a heart rate monitor, a blood pressure monitor, etc.), or other device that may receive and/or transmit information wirelessly. In some embodiments, HEW device 500 may include one or more of a keyboard, a display, a nonvolatile memory port, multiple antennas, a graphics processor, an application processor, speakers, and other mobile device elements. The display may be an LCD screen including a touch screen.

The antennas of HEW device 500 may comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result between each of antennas and the antennas of a transmitting station.

Although HEW device 500 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements of HEW device 500 may refer to one or more processes operating on one or more processing elements.

In some embodiments, the hardware processing circuitry of an HEW device when operating as an HEW station 104 may be configured to receive an HEW signal field (HEW-SIG-A) on one of a plurality of 20 MHz channels from the master station 102. The HEW signal field may configure the HEW station 104 for communication on the one or more OFDMA subchannels of an associated one of the 20 MHz channels in accordance with an OFDMA technique. The channel resources may comprise one or more OFDMA subchannels within a 20 MHz channel. The HEW station 104 may also be configured to communicate data with the master station 102 the indicated OFDMA subchannel based on configuration information received in the HEW signal field. Each OFDMA subchannel may one or more minimum bandwidth units having a predetermined bandwidth. In these embodiments, the received HEW signal field may include an indicator to indicate a subchannel configuration of the associated 20 MHz channel. The subchannel configuration may include at least a number of the minimum bandwidth units. The received HEW signal field may also include information for communicating within the subchannels during an OFDMA control period including a modulation and coding scheme (MCS) indicator and length indicator for the minimum bandwidth units.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

FIG. 6 is a procedure for HEW communication by a master station in accordance with some embodiments. Procedure 600 may be performed by an access point operating as a master station 102 for communication with a plurality of HEW stations 104.

In operation 602, the master station 102 may generate a packet that includes a transmission signaling structure to configure scheduled HEW stations 104 for communication on channel resources in accordance with an OFDMA technique. The channel resources may comprise one or more OFDMA subchannels within a 20 MHz channel and each OFDMA subchannel may one or more minimum bandwidth units having a predetermined bandwidth.

In operation 604, the transmission signaling structure may be configured to include a separate HEW signal field (e.g., an HEW-SIG-A) for each of a plurality of the 20 MHz channels and each HEW signal field may be arranged to configure one or more of the scheduled HEW stations 104 for communication on the one or more OFDMA subchannels of an associated one of the 20 MHz channels in accordance with the OFDMA technique. Each HEW signal field may be a 20 MHz transmission on an associated one of the 20 MHz channels and each of the separate HEW signal fields may be configured to be transmitted concurrently on an associated one of the 20 MHz channels.

In operation 606, the HEW signal field for each 20 MHz channel may be configured to include an indicator to indicate a subchannel configuration of the associated 20 MHz channel. The subchannel configuration may include at least a number of the minimum bandwidth units. The HEW signal field for each 20 MHz channel may be configured to include information for communicating within the subchannels during an OFDMA control period including a MCS indicator and length indicator for the minimum bandwidth units.

After the HEW signal field is generated in operation 606, the master station 102 transmit the packet that includes the HEW signal field 212 and any other fields (e.g., fields 214 (FIG. 2)) to the scheduled stations 104 for subsequent communication of downlink and/or uplink data in the data field 216 as discussed above.

## Claims

1. An apparatus (500) comprising: memory (508); and processing circuitry (506) coupled to the memory, the processing circuitry configured to:
encode a high efficiency, HE, packet (200) comprising a HE signal, HE-SIG, field, the HE-SIG field (212) comprising an indicator to indicate, for a 20 MHz bandwidth (202), a resource unit, RU, (302) arrangement of a plurality of RU arrangements (312A-E) in a frequency domain, wherein each RU of the RU arrangement is a orthogonal frequency division multiple access, OFDMA, subchannel of subcarriers of the 20 MHz bandwidth, the indicator to further indicate a number of multi-user multiple-input multiple-output, MU-MIMO, allocations for each RU of the RU arrangement of the plurality of RU arrangements, the RU arrangement comprising a mix of different RU sizes for the 20 MHz bandwidth, wherein the HE-SIG field is to configure HE stations to receive a data portion of the HE packet, the data portion of the HE packet (216) configured in accordance with the RU arrangement; and
configure the HE packet for transmission by a wireless device (102) to the HE stations (104).

2. The apparatus of claim 1, wherein the processing circuitry is further configured to:
encode a cyclic-redundancy check, CRC, for the HE-SIG field in the HE-SIG field.

3. The apparatus of claim 1, wherein the HE-SIG field further comprises configuration parameters for each RU of the RU arrangement of the plurality of RU arrangements, and wherein the configuration parameters comprise one or more of the following fields: an indication of a modulation and coding scheme, MCS, an indicator if a Low-density parity-check code is to be used, and an indication if beamforming is to be used.

4. The apparatus of claim 1, wherein the processing circuitry is further configured to:
encode the HE packet to further comprise a second HE-SIG field, the second HE-SIG field comprising a second indicator to indicate, for a second 20 MHz bandwidth, a second RU arrangement, wherein the second 20 MHz bandwidth and the 20 MHz bandwidth are different portions of a 40 MHz bandwidth.

5. The apparatus of claim 4, wherein the processing circuitry is further configured to:
configure the HE packet for transmission by the wireless device, wherein the HE-SIG field is to be transmitted on the 20 MHz bandwidth and the second HE-SIG field is to be transmitted on the second 20 MHz bandwidth.

6. The apparatus of claim 5, wherein the HE-SIG field further comprises configuration parameters for each RU of the RU arrangement of the plurality of RU arrangements, and wherein the second HE-SIG field further comprises second configuration parameters for each RU of the second RU arrangement, the configuration parameters and the second configuration parameters comprising an indication of a modulation and coding scheme, MCS.

7. The apparatus of claim 6, wherein the processing circuitry is further configured to:
encode the data portion of the HE packet with data to be encoded in accordance with configuration parameters associated with each RU of the RU arrangement on the 20 MHz bandwidth of the HE packet; and
encode a second data portion of the HE packet with second data to be encoded in accordance with second configuration parameters associated with each RU of the second RU arrangement on a second 20 MHz bandwidth of the HE packet.

8. The apparatus of claim 1, wherein each of the plurality of RU arrangements indicate a number of RUs and a location of each of the number of RUs.

9. The apparatus of claim 1, wherein the HE-SIG field further comprises configuration parameters for each of the RUs of the RU arrangement and wherein the configuration parameters comprise an indicator to indicate if the RU is a single user, SU, or multi-user, MU, RU and a number of space-time streams.

10. The apparatus of claim 1, wherein each of the HE stations and the wireless device is one of the following group: an Institute of Electrical and Electronic Engineers (IEEE) 802.11 access point, an IEEE 802.11 station, an IEEE 802.11ax access point, and an IEEE 802.11ax station.

11. The apparatus of claim 1, further comprising transceiver circuitry coupled to the processing circuitry; and a plurality of antennas coupled to the transceiver circuitry.

12. A method performed by an apparatus, the method comprising:
encoding a high efficiency, HE, packet comprising a HE signal, HE-SIG, field, the HE-SIG field comprising an indicator to indicate, for a 20 MHz bandwidth, a resource unit, RU, arrangement of a plurality of RU arrangements in a frequency domain, wherein each RU of the RU arrangement is a orthogonal frequency division multiple access, OFDMA, subchannel of subcarriers of the 20 MHz bandwidth, the indicator to further indicate a number of multi-user multiple-input multiple-output,MU-MIMO, allocations for each RU of the RU arrangement of the plurality of RU arrangements, the RU arrangement comprising a mix of different RU sizes for the 20 MHz bandwidth, wherein the HE-SIG field is to configure HE stations to receive a data portion of the HE packet, the data portion of the HE packet configured in accordance with the RU arrangement; and
configuring the HE packet for transmission by a wireless device to the HE stations.

13. The method of claim 12, wherein the HE-SIG field further comprises configuration parameters for each RU of the RU arrangement of the plurality of RU arrangements, and wherein the configuration parameters comprise one or more of the following fields: an indication of a modulation and coding scheme, MCS, an indicator if a Low-density parity-check code is to be used, and an indication if beamforming is to be used.

14. A non-transitory computer-readable storage medium that stores instructions for execution by one or more processors, the instructions to configure the one or more processors to cause an apparatus to:
encode a high efficiency, HE, packet comprising a HE signal, HE-SIG, field, the HE-SIG field comprising an indicator to indicate, for a 20 MHz bandwidth, a resource unit, RU, arrangement of a plurality of RU arrangements in a frequency domain, wherein each RU of the RU arrangement is a orthogonal frequency division multiple access, OFDMA, subchannel of subcarriers of the 20 MHz bandwidth, the indicator to further indicate a number of multi-user multiple-input multiple-output, MU-MIMO, allocations for each RU of the RU arrangement of the plurality of RU arrangements, the RU arrangement comprising a mix of different RU sizes for the 20 MHz bandwidth, wherein the HE-SIG field is to configure HE stations to receive a data portion of the HE packet, the data portion of the HE packet configured in accordance with the RU arrangement; and
configure the HE packet for transmission by a wireless device to the HE stations.

15. The non-transitory computer-readable storage medium of claim 14, wherein the instructions are to further configure the one or more processors to cause the apparatus to:
encode the HE packet to further comprise a second HE-SIG field, the second HE-SIG field comprising a second indicator to indicate, for a second 20 MHz bandwidth, a second RU arrangement, wherein the second 20 MHz bandwidth and the 20 MHz bandwidth are different portions of a 40 MHz bandwidth.

## Patentansprüche

1. Vorrichtung (500), die Folgendes umfasst: einen Speicher (508) und eine Verarbeitungsschaltungsanordnung (506), die an den Speicher gekoppelt ist, wobei die Verarbeitungsschaltungsanordnung konfiguriert ist,
ein hocheffizientes Paket (HE-Paket) (200) zu codieren, das ein HE-Signalfeld (HE-SIG-Feld) umfasst, wobei das HE-SIG-Feld (212) einen Indikator umfasst, um für eine 20 MHz-Bandbreite (202) eine Betriebsmitteleinheit-Anordnung (RU-Anordnung) (302) aus mehreren RU-Anordnungen (312A-E) in einer Frequenzdomäne anzuzeigen, wobei jede RU der RU-Anordnung einem orthogonalen Frequenzmultiplex-Mehrfachzugriff-Unterkanal (OFDMA-Unterkanal) von Unterträgern der 20 MHz-Bandbreite entspricht, wobei der Indikator ferner eine Zahl von Zuweisungen mit Mehrfachanwender-"Multiple-Input-Multiple-Output"-Zuordnungen (MU-MIMO-Zuordnungen) für jede RU der RU-Anordnung der mehreren RU-Anordnungen anzeigen soll, wobei die RU-Anordnung eine Mischung aus verschiedenen RU-Größen für die 20 MHz-Bandbreite umfasst, wobei das HE-SIG-Feld HE-Stationen konfigurieren soll, um einen Datenabschnitt des HE-Pakets zu empfangen, wobei der Datenabschnitt des HE-Pakets (216) in Übereinstimmung mit der RU-Anordnung konfiguriert ist; und
das HE-Paket für die Übertragung durch eine drahtlose Einrichtung (102) zu den HE-Stationen (104) zu konfigurieren.

2. Vorrichtung nach Anspruch 1, wobei die Verarbeitungsschaltungsanordnung ferner konfiguriert ist:
eine zyklische Redundanzprüfung (CRC) für das HE-SIG-Feld in dem HE-SIG-Feld zu codieren.

3. Vorrichtung nach Anspruch 1, wobei das HE-SIG-Feld ferner Konfigurationsparameter für jede RU der RU-Anordnung der mehreren RU-Anordnungen umfasst, und wobei die Konfigurationsparameter eines oder mehrere der folgenden Felder umfasst: eine Anzeige eines Modulations- und Codierungsschemas (MCS), einen Indikator, ob ein Low-Density-Parity-Check-Code verwendet werden soll, und eine Anzeige, ob Strahlformung verwendet werden soll.

4. Vorrichtung nach Anspruch 1, wobei die Verarbeitungsschaltungsanordnung ferner konfiguriert ist,
das HE-Paket zu codieren, so dass es ferner ein zweites HE-SIG-Feld enthält, wobei das zweite HE-SIG-Feld einen zweiten Indikator umfasst, um für eine zweite 20 MHz-Bandbreite eine zweite RU-Anordnung anzuzeigen, wobei die zweite 20 MHz-Bandbreite und die 20 MHz-Bandbreite unterschiedliche Abschnitte einer 40 MHz-Bandbreite sind.

5. Vorrichtung nach Anspruch 4, wobei die Verarbeitungsschaltungsanordnung ferner konfiguriert ist,
das HE-Paket für die Übertragung durch die drahtlose Einrichtung zu konfigurieren, wobei das HE-SIG-Feld auf der 20 MHz-Bandbreite übertragen werden soll und das zweite HE-SIG-Feld auf der zweiten 20 MHz-Bandbreite übertragen werden soll.

6. Vorrichtung nach Anspruch 5, wobei das HE-SIG-Feld ferner Konfigurationsparameter für jede RU der RU-Anordnung der mehreren RU-Anordnungen umfasst und wobei das zweite HE-SIG-Feld ferner zweite Konfigurationsparameter für jede RU der zweiten RU-Anordnung umfasst, wobei die Konfigurationsparameter und die zweiten Konfigurationsparameter eine Anzeige eines Modulations- und Codierungsschemas (MCS) umfasst.

7. Vorrichtung nach Anspruch 6, wobei die Verarbeitungsschaltungsanordnung ferner konfiguriert ist,
den Datenabschnitt des HE-Paketes mit Daten zu codieren, die in Übereinstimmung mit Konfigurationsparametern codiert werden sollen, die jeder RU der RU-Anordnung auf der 20 MHz-Bandbreite des HE-Pakets zugeordnet sind; und
einen zweiten Datenabschnitt des HE-Paketes mit zweiten Daten zu codieren, die in Übereinstimmung mit zweiten Konfigurationsparametern codiert werden sollen, die jeder RU der zweiten RU-Anordnung auf einer 20 MHz-Bandbreite des HE-Pakets zugeordnet sind.

8. Vorrichtung nach Anspruch 1, wobei jede der mehreren RU-Anordnungen eine Zahl von RUs und einen Ort für jede der Zahl der RUs anzeigen.

9. Vorrichtung nach Anspruch 1, wobei das HE-SIG-Feld ferner Konfigurationsparameter für jede der RUs der RU-Anordnung umfasst und wobei die Konfigurationsparameter einen Indikator, um anzuzeigen, ob die RU einem Einzelanwender (SU) oder Mehrfachanwendern (MU) entspricht, eine RU und eine Zahl von Raum-Zeit-Datenströmen umfassen.

10. Vorrichtung nach Anspruch 1, wobei jede der HE-Stationen und die drahtlose Einrichtung einem Element der folgenden Gruppe entsprechen: einem "Institute of Electrical and Electronics Engineers (IEEE) 802.11"-Zugriffspunkt, einer 802.11-Station, einem 802.11ax-Zugriffspunkt und einer 802.11ax-Station.

11. Vorrichtung nach Anspruch 1, die ferner eine Sende-Empfänger-Schaltungsanordnung, die an die Verarbeitungsschaltungsanordnung gekoppelt ist; und mehrere Antennen, die an die Sende-Empfänger-Schaltungsanordnung gekoppelt sind, umfasst.

12. Verfahren, das von einer Vorrichtung durchgeführt wird, wobei das Verfahren Folgendes umfasst:
Codieren eines hocheffizienten Paketes (HE-Paket), das ein HE-Signalfeld (HE-SIG-Feld) umfasst, wobei das HE-SIG-Feld einen Indikator umfasst, um für eine 20 MHz-Bandbreite eine Betriebsmitteleinheit-Anordnung (RU-Anordnung) aus mehreren RU-Anordnungen in einer Frequenzdomäne anzuzeigen, wobei jede RU der RU-Anordnung einem orthogonalen Frequenzmultiplex-Mehrfachzugriff-Unterkanal (OFDMA-Unterkanal) von Unterträgern der 20 MHz-Bandbreite entspricht, wobei der Indikator ferner eine Zahl von Zuweisungen mit Mehrfachanwender-"Multiple-Input-Multiple-Output"-Zuordnungen (MU-MIMO-Zuordnungen) für jede RU der RU-Anordnung der mehreren RU-Anordnungen anzeigen soll, wobei die RU-Anordnung eine Mischung aus verschiedenen RU-Größen für die 20 MHz-Bandbreite umfasst, wobei das HE-SIG-Feld HE-Stationen konfigurieren soll, um einen Datenabschnitt des HE-Pakets zu empfangen, wobei der Datenabschnitt des HE-Pakets in Übereinstimmung mit der RU-Anordnung konfiguriert ist; und
Konfigurieren des HE-Pakets für die Übertragung durch eine drahtlose Einrichtung zu den HE-Stationen.

13. Verfahren nach Anspruch 12, wobei das HE-SIG-Feld ferner Konfigurationsparameter für jede RU der RU-Anordnung der mehreren RU-Anordnungen umfasst, und wobei die Konfigurationsparameter eines oder mehrere der folgenden Felder umfasst: eine Anzeige eines Modulations- und Codierungsschemas (MCS), einen Indikator, ob ein "Low-Density-Parity-Check"-Code verwendet werden soll, und eine Anzeige, ob Strahlformung verwendet werden soll.

14. Nichttransitorisches computerlesbares Speichermedium, das Anweisungen für die Ausführung durch einen oder mehrere Prozessoren speichert, wobei die Anweisungen den einen oder die mehreren Prozessoren konfigurieren sollen, eine Vorrichtung zu veranlassen:
ein hocheffizientes Paket (HE-Paket) zu codieren, das ein HE-Signalfeld (HE-SIG-Feld) umfasst, wobei das HE-SIG-Feld einen Indikator umfasst, um für eine 20 MHz-Bandbreite eine Betriebsmitteleinheit-Anordnung (RU-Anordnung) aus mehreren RU-Anordnungen in einer Frequenzdomäne anzuzeigen, wobei jede RU der RU-Anordnung einem orthogonalen Frequenzmultiplex-Mehrfachzugriff-Unterkanal (OFDMA-Unterkanal) von Unterträgern der 20 MHz-Bandbreite entspricht, wobei der Indikator ferner eine Zahl von Zuweisungen mit Mehrfachanwender-"Multiple-Input-Multiple-Output"-Zuordnungen (MU-MIMO-Zuordnungen) für jede RU der RU-Anordnung der mehreren RU-Anordnungen anzeigen soll, wobei die RU-Anordnung eine Mischung aus verschiedenen RU-Größen für die 20 MHz-Bandbreite umfasst, wobei das HE-SIG-Feld HE-Stationen konfigurieren soll, um einen Datenabschnitt des HE-Pakets zu empfangen, wobei der Datenabschnitt des HE-Pakets in Übereinstimmung mit der RU-Anordnung konfiguriert ist; und
das HE-Paket für die Übertragung durch eine drahtlose Einrichtung zu den HE-Stationen zu konfigurieren.

15. Nichttransitorisches computerlesbares Speichermedium nach Anspruch 14, wobei die Anweisungen ferner den einen oder die mehreren Prozessoren konfigurieren sollen, die Vorrichtung zu veranlassen:
das HE-Paket zu codieren, so dass es ferner ein zweites HE-SIG-Feld enthält, wobei das zweite HE-SIG-Feld einen zweiten Indikator umfasst, um für eine zweite 20 MHz-Bandbreite eine zweite RU-Anordnung anzuzeigen, wobei die zweite 20 MHz-Bandbreite und die 20 MHz-Bandbreite unterschiedliche Abschnitte einer 40 MHz-Bandbreite sind.

## Revendications

1. Appareil (500) comportant : une mémoire (508) ; et une circuiterie (506) de traitement couplée à la mémoire, la circuiterie de traitement étant configurée pour :
coder un paquet (200) à haut rendement, HE, comportant un champ de signal HE, HE-SIG, le champ HE-SIG (212) comportant un indicateur servant à indiquer, pour une bande passante (202) de 20 MHz, un agencement d'unités de ressources, RU (302) parmi une pluralité d'agencements (312A-E) de RU dans un domaine fréquentiel, chaque RU de l'agencement de RU étant un sous-canal à accès multiple par répartition orthogonale de fréquence, OFDMA, de sous-porteuses de la bande passante de 20 MHz, l'indicateur servant à indiquer en outre un nombre d'attributions à entrées et sorties multiples multiutilisateurs, MU-MIMO, pour chaque RU de l'agencement de RU parmi la pluralité d'agencements de RU, l'agencement de RU comportant un mélange de différentes tailles de RU pour la bande passante de 20 MHz, le champ HE-SIG servant à configurer des stations HE pour recevoir une partie de données du paquet HE, la partie (216) de données du paquet HE étant configurée conformément à l'agencement de RU ; et
configurer le paquet HE pour une transmission par un dispositif (102) sans fil aux stations HE (104).

2. Appareil selon la revendication 1, la circuiterie de traitement étant en outre configurée pour :
coder un contrôle de redondance cyclique, CRC, pour le champ HE-SIG dans le champ HE-SIG.

3. Appareil selon la revendication 1, le champ HE-SIG comportant en outre des paramètres de configuration pour chaque RU de l'agencement de RU parmi la pluralité d'agencements de RU, et les paramètres de configuration comportant un ou plusieurs des champs suivants : une indication d'un schéma de modulation et de codage, MCS, un indicateur selon lequel un code de vérification de parité à basse densité doit être utilisé ou non, et une indication selon laquelle une mise en forme de faisceau doit être utilisée ou non.

4. Appareil selon la revendication 1, la circuiterie de traitement étant en outre configurée pour :
coder le paquet HE pour qu'il comporte en outre un deuxième champ HE-SIG, le deuxième champ HE-SIG comportant un deuxième indicateur servant à indiquer, pour une deuxième bande passante de 20 MHz, un deuxième agencement de RU, la deuxième bande passante de 20 MHz et la bande passante de 20 MHz étant des parties différentes d'une bande passante de 40 MHz.

5. Appareil selon la revendication 4, la circuiterie de traitement étant en outre configurée pour :
configurer le paquet HE pour la transmission par le dispositif sans fil, le champ HE-SIG devant être transmis sur la bande passante de 20 MHz et le deuxième champ HE-SIG devant être transmis sur la deuxième bande passante de 20 MHz.

6. Appareil selon la revendication 5, le champ HE-SIG comportant en outre des paramètres de configuration pour chaque RU de l'agencement de RU parmi la pluralité d'agencements de RU, et le deuxième champ HE-SIG comportant en outre des deuxièmes paramètres de configuration pour chaque RU du deuxième agencement de RU, les paramètres de configuration et les deuxièmes paramètres de configuration comportant une indication d'un schéma de modulation et de codage, MCS.

7. Appareil selon la revendication 6, la circuiterie de traitement étant en outre configurée pour :
coder la partie de données du paquet HE avec des données à coder conformément à des paramètres de configuration associés à chaque RU de l'agencement de RU sur la bande passante de 20 MHz du paquet HE ; et
coder une deuxième partie de données du paquet HE avec des deuxièmes données à coder conformément à des deuxièmes paramètres de configuration associés à chaque RU du deuxième agencement de RU sur une deuxième bande passante de 20 MHz du paquet HE.

8. Appareil selon la revendication 1, chaque agencement de la pluralité d'agencements de RU indiquant une multiplicité de RU et un emplacement de chaque RU de la multiplicité de RU.

9. Appareil selon la revendication 1, le champ HE-SIG comportant en outre des paramètres de configuration pour chacune des RU de l'agencement de RU et les paramètres de configuration comportant un indicateur servant à indiquer si la RU est une RU mono-utilisateur, SU, ou multiutilisateurs, MU, et un nombre de flux spatiotemporels.

10. Appareil selon la revendication 1, chacune des stations HE et le dispositif sans fil appartenant au groupe suivant : un point d'accès selon la norme Institute of Electrical and Electronic Engineers (IEEE) 802.11, une station IEEE 802.11, un point d'accès IEEE 802.11ax, et une station IEEE 802.11ax.

11. Appareil selon la revendication 1, comportant en outre une circuiterie d'émetteur-récepteur couplée à la circuiterie de traitement ; et une pluralité d'antennes couplée à la circuiterie d'émetteur-récepteur.

12. Procédé réalisé par un appareil, le procédé comportant les étapes consistant à :
coder un paquet à haut rendement, HE, comportant un champ de signal HE, HE-SIG, le champ HE-SIG comportant un indicateur servant à indiquer, pour une bande passante de 20 MHz, un agencement d'unités de ressources, RU, parmi une pluralité d'agencements de RU dans un domaine fréquentiel, chaque RU de l'agencement de RU étant un sous-canal à accès multiple par répartition orthogonale de fréquence, OFDMA, de sous-porteuses de la bande passante de 20 MHz, l'indicateur servant à indiquer en outre un nombre d'attributions à entrées et sorties multiples multiutilisateurs, MU-MIMO, pour chaque RU de l'agencement de RU parmi la pluralité d'agencements de RU, l'agencement de RU comportant un mélange de différentes tailles de RU pour la bande passante de 20 MHz, le champ HE-SIG servant à configurer des stations HE pour recevoir une partie de données du paquet HE, la partie de données du paquet HE étant configurée conformément à l'agencement de RU ; et
configurer le paquet HE pour une transmission par un dispositif sans fil aux stations HE.

13. Procédé selon la revendication 12, le champ HE-SIG comportant en outre des paramètres de configuration pour chaque RU de l'agencement de RU parmi la pluralité d'agencements de RU, et les paramètres de configuration comportant un ou plusieurs des champs suivants : une indication d'un schéma de modulation et de codage, MCS, un indicateur selon lequel un code de vérification de parité à basse densité doit être utilisé ou non, et une indication selon laquelle une mise en forme de faisceau doit être utilisée ou non.

14. Support de stockage non transitoire lisible par ordinateur qui conserve des instructions destinées à être exécutées par un ou plusieurs processeurs, les instructions servant à configurer le ou les processeurs pour amener un appareil à :
coder un paquet à haut rendement, HE, comportant un champ de signal HE, HE-SIG, le champ HE-SIG comportant un indicateur servant à indiquer, pour une bande passante de 20 MHz, un agencement d'unités de ressources, RU, parmi une pluralité d'agencements de RU dans un domaine fréquentiel, chaque RU de l'agencement de RU étant un sous-canal à accès multiple par répartition orthogonale de fréquence, OFDMA, de sous-porteuses de la bande passante de 20 MHz, l'indicateur servant à indiquer en outre un nombre d'attributions à entrées et sorties multiples multiutilisateurs, MU-MIMO, pour chaque RU de l'agencement de RU parmi la pluralité d'agencements de RU, l'agencement de RU comportant un mélange de différentes tailles de RU pour la bande passante de 20 MHz, le champ HE-SIG servant à configurer des stations HE pour recevoir une partie de données du paquet HE, la partie de données du paquet HE étant configurée conformément à l'agencement de RU ; et
configurer le paquet HE pour une transmission par un dispositif sans fil aux stations HE.

15. Support de stockage non transitoire lisible par ordinateur selon la revendication 14, les instructions servant à configurer en outre le ou les processeurs pour amener l'appareil à :
coder le paquet HE pour qu'il comporte en outre un deuxième champ HE-SIG, le deuxième champ HE-SIG comportant un deuxième indicateur servant à indiquer, pour une deuxième bande passante de 20 MHz, un deuxième agencement de RU, la deuxième bande passante de 20 MHz et la bande passante de 20 MHz étant des parties différentes d'une bande passante de 40 MHz.
